# EUROPÄISCHE PATENTSCHRIFT

(11) **EP 2 295 209 B1**
(45) Veröffentlichungstag und Bekanntmachung des Hinweises auf die Patenterteilung: **31.10.2012**
(21) Anmeldenummer: 10009059.6
(22) Anmeldetag: 01.09.2010
(51) Int. Cl.: B25J 9/10, B25J 19/00, B66C 23/00

(54) **Hebezeug zum manuellen Manipulieren einer Last**
Lifting device for manual manipulation of a load
Elément de levage pour la manipulation manuelle d'une charge

(30) Priorität: 15.09.2009 DE 202009012493 U
(43) Veröffentlichungstag der Anmeldung: 16.03.2011
(73) Patentinhaber: EFS-Gesellschaft für Hebe- und Handhabungstechnik mbh, 74226 Nordheim (DE)
(72) Erfinder: Scholz, Harald, 74321 Bietigheim-Bissingen (DE)
(74) Vertreter: Riedel, Peter

(56) Entgegenhaltungen:
- WO-A1-98/43911
- DE-A1- 3 204 885
- DE-A1- 19 945 189
- US-A- 3 945 612
- US-B1- 6 612 449

## Beschreibung

Die Erfindung betrifft ein Hebezeug zum manuellen Manipulieren einer Last der im Oberbegriff des Anspruchs 1 angegebenen Gattung.

Bei der Montage von Bauteilen oder Baugruppen, beispielsweise im Kraftfahrzeugbereich, müssen diese an Ort und Stelle gebracht und dort für die Montage gehalten werden. Dies kann bei kleineren Lasten von Hand geschehen. Bei Bauteilen, Baugruppen oder anderen Lasten mit höherem Gewicht werden Hebezeuge zur Unterstützung der Handkraft des Werkers eingesetzt, mit denen die Lasten manuell manipuliert und dadurch in die gewünschte Position verbracht werden können.

Vorbekannte Hebezeuge dieser Art, wie sie beispielsweise aus der DE 199 45 189 B4 bekannt sind, umfassen mindestens einen Manipulatorarm, der an einem zugeordneten Schwenkgelenk mit einer vertikalen Schwenkachse schwenkbar gelagert ist. Außerdem weist der Manipulatorarm Haltemittel für die Last auf. Durch die vertikale Anordnung der Schwenkachse ist diese im Wesentlichen frei von äußeren Gewichtskraftmomenten. Das Hebezeug hält die zu manipulierende Last in Gewichtskraftrichtung, so dass der Werker von dieser Gewichtskraft entlastet ist. In horizontaler Richtung kann die Last manuell manipulierend bewegt und feinfühlig positioniert werden, indem der Werker an der Last oder am Hebezeug in unmittelbarer Nähe zu dessen Haltemitteln eine Handkraft aufbringt. Die Handkraft muss nur so groß sein, dass entsprechende Beschleunigungen bzw. Verzögerungen des Bewegungsablaufes erzeugt und Reibkräfte in den Schwenkgelenken überwunden werden. Insgesamt wird dabei die Bewegung der Last rein manuell herbeigeführt und gesteuert, was eine lagegenaue und feinfühlige Positionierung der Last ermöglicht.

Die vorbekannten Hebezeuge haben sich in der Praxis derart bewährt, dass zunehmend auch ihr Einsatz für schwerere Lasten gefordert wird. Mit steigender Masse der Last können deren Trägheitskräfte jedoch so groß werden, dass eine manuelle Beschleunigung, Verzögerung und Positionierung schwierig wird. Dieser Umstand schränkt den Einsatzbereich der zu manipulierenden Lasten hinsichtlich ihrer Masse ein.

Die Verwendung herkömmlicher Krane oder anderer motorisch angetriebener Hebezeuge scheidet aber in vielen Fällen aus, da die motorische Lagepositionierung der Last nicht genau und feinfühlig genug herbeigeführt werden kann.

Das Dokument US 6 612 449 B1 offenbart ein Hebezeug gemäß des Oberbegriffes von Anspruch 1.

Der Erfindung liegt die Aufgabe zugrunde, ein gattungsgemäßes Hebezeug derart weiterzubilden, dass sein Lastspektrum erweitert ist.

Diese Aufgabe wird durch ein Hebezeug mit den Merkmalen des Anspruchs 1 gelöst.

Hierzu wird ein Hebezeug vorgeschlagen, bei dem ein auf das Schwenkgelenk einwirkender Unterstützungsantrieb für eine Verschwenkung des Manipulatorarms vorgesehen ist, und wobei im Bereich der Haltemittel für die Last eine durch den Benutzer betätigbare Steuereinrichtung für den Unterstützungsantrieb angeordnet ist.

Durch die erfindungsgemäße Anordnung bleiben die Vorteile des bekannten Hebezeuges erhalten. Der Werker steht weiterhin im Bereich der Haltemittel für die Last und kann diese manuell in die gewünschte Lage und Position manipulieren. Gleichzeitig hat er aber durch die erfindungsgemäße Ausgestaltung direkten Zugriff auf die Steuereinrichtung, mittels derer der Unterstützungsantrieb gesteuert wird. Bei entsprechender Auslegung des Unterstützungsantriebes kann dieser entsprechend hohe Anfahr- oder Abbremsmomente erzeugen, um Beschleunigungen bzw. Verzögerungen der Last auch bei erhöhten Massekräften durch Verschwenkung des Manipulatorarms herbeizuführen. Der Werker behält dabei weiterhin direkten Kontakt zur Last, wodurch er deren Lage und Position durch Handkraft manuell korrigieren bzw. anpassen kann. Insgesamt können damit auch schwere Bauteile, Baugruppen und andere Lasten mit einer Masse von mehr als 100 kg bewegt und lagegenau positioniert werden.

Gemäß der Erfindung umfasst der Unterstützungsantrieb eine Momentenbegrenzung in Form einer Rutschkupplung. Die Rutschkupplung ist derart ausgelegt, dass ihr Übertragungsmoment durch Handkraft des Benutzers bzw. Werkers überwunden werden kann. Die Rutschkupplung verhindert, dass durch den Unterstützungsantrieb zu hohe Momente übertragen werden. Insbesondere kann der Werker die vom Unterstützungsantrieb erzeugte beschleunigte, gleichförmige oder verzögerte Bewegung manuell durch Handkraft übersteuern. Im Ergebnis wirkt der Antrieb tatsächlich nur unterstützend zur aufgebrachten Handkraft, um Kraft- und Momentenspitzen auszugleichen. Die genaue Lagepositionierung der Last kann weiterhin unter Überwindung der weniger genauen motorischen Steuerung feinfühlig von Hand erfolgen.

In einer bevorzugten Ausführungsform ist die Rutschkupplung durch ein Reibradgetriebe gebildet. Der Unterstützungsantrieb treibt dabei den Manipulatorarm mittels eines Reibrades an, welches auf einer Reibscheibe abrollt. Bei geringem konstruktivem Aufwand ist eine hohe Funktionssicherheit gegeben, bei der einerseits hinreichend hohe motorische Antriebsmomente bereitgestellt werden können, die aber andererseits durch Aufbringen von Handkraft zum Durchrutschen gebracht werden können. Hierdurch bleibt eine manuelle Lage- bzw. Positionskorrektur möglich, ohne dass der Unterstützungsantrieb ausgekuppelt werden muss.

Für die Ausgestaltung des Unterstützungsantriebes kommen verschiedene Möglichkeiten wie die eines Elektromotors, eines Hydraulikmotors oder dergleichen in Betracht. Bevorzugt weist der Unterstützungsantrieb einen Pneumatikmotor auf. Dieser hat sich aufgrund seiner Lastwechselfestigkeit als zweckmäßig herausgestellt. Außerdem kann er nach erfolgter Beschleunigung der Last im Wesentlichen momentenfrei mit dem bewegten Manipulatorarm mitlaufen, ohne ausgekuppelt werden zu müssen. Bei ausgeschaltetem bzw. nicht aktiviertem Unterstützungsantrieb kann der Pneumatikmotor leicht durchgedreht werden, was eine manuelle Lagekorrektur der Last erleichtert.

In einer vorteilhaften Ausführungsform ist der Manipulatorarm mittels des zugeordneten Schwenkgelenkes ortsfest insbesondere an einer Tragsäule gelagert und dabei bevorzugt ohne Drehwinkelbegrenzung um das Schwenkgelenk schwenkbar. Die ortsfeste Lagerung stellt sicher, dass die Schwenkachse des zugeordneten Schwenkgelenkes vertikal ausgerichtet bleibt und daher dauerhaft frei von äußeren, um diese Schwenkachse wirkenden Gewichtskraftmomenten ist. Hierdurch ist sichergestellt, dass die Handkraft des Werkers und das unterstützende Antriebsmoment des Unterstützungsantriebes im Wesentlichen nur die Trägheitskräfte der Last beim Beschleunigen bzw. Verzögern aufbringen müssen, ohne eine Hubarbeit gegen die Erdanziehungskraft zu leisten. Hierdurch ist die Anordnung leichtgängig und feinfühlig steuerbar. Der Verzicht auf eine Drehwinkelbegrenzung erlaubt die Erreichbarkeit sämtlicher Positionierorte, die innerhalb des Radius des Manipulatorarmes liegen.

In einer vorteilhaften Ausführungsform sind zwei Manipulatorarme vorgesehen, wobei der zweite Manipulatorarm mittels des zugeordneten Schwenkgelenkes an einem freien Ende des ersten Manipulatorarms gelagert und dabei insbesondere mit einer Drehwinkelbegrenzung um das Schwenkgelenk schwenkbar ist. Es entsteht die Möglichkeit zweier überlagerter Schwenkbewegungen, mittels derer der Werker auch translatorische Bewegungen der Last herbeiführen und dabei sämtliche Positionen innerhalb des Hebezeugradius anfahren kann. Die Drehwinkelbegrenzung verhindert eine Kollision des zweiten Manipulatorarms bzw. der daran gehaltenen Last beispielsweise mit der mittigen Tragsäule. Außerdem wird vermieden, dass sich Pneumatikleitungen, elektrische Versorgungs- und Steuerleitungen oder andere Leitungen infolge eines übermäßigen Schwenkwinkels verdrillen.

Es kann zweckmäßig sein, nur eines der beiden vorgenannten Schwenkgelenke mit einem Unterstützungsantrieb auszustatten. Bevorzugt sind beide Schwenkgelenke mit je einem Unterstützungsantrieb versehen. Hierdurch können motorisch unterstützte Beschleunigungen und Verzögerungen in allen ebenen Bewegungsfreiheitsgraden erzeugt werden.

In vorteilhafter Weiterbildung sind die Haltemittel für die Last an einem freien Ende des Manipulatorarms mittels eines vertikalen Trägers und eines weiteren Schwenkgelenkes mit vertikaler Schwenkachse befestigt, wobei die Haltemittel durch Handkraft frei insbesondere mit einer Drehwinkelbegrenzung um dieses zusätzliche Schwenkgelenk schwenkbar sind. Die Haltemittel und die daran gehaltene Last liegen zentrisch unter dem weiteren Schwenkgelenk, so dass eine Verschwenkung um dieses weitere Schwenkgelenk zu keiner nennenswerten lateralen Beschleunigung bzw. Verzögerung der Last führt. Bei einer Schwenkbewegung sind hier vorrangig nur die rotatorischen Massenträgheitsmomente zu überwinden, was jedoch selbst bei schwereren Lasten ohne weiteres durch Handkraft geschehen kann. Durch den Verzicht auf einen Unterstützungsantrieb in diesem Bereich bleibt die Anordnung einfach und kostengünstig im Aufbau, während gleichzeitig die Last seitens des Werkers manuell und feinfühlig in die gewünschte Schwenkwinkelposition gebracht werden kann. Die optional vorgesehene Drehwinkelbegrenzung vermeidet auch hier in oben genannter Weise ein Verdrillen von Leitungen oder dergleichen.

Bevorzugt ist die Steuereinrichtung an einem freien Ende des genannten vertikalen Trägers nahe den Haltemitteln für die Last angeordnet. Hierdurch bleiben gleichzeitig die Last und die Steuereinrichtung im Zugriffsbereich des Werkers. Der Werker kann gleichzeitig den oder die Unterstützungsantriebe betätigen bzw. steuern und außerdem die Lage der Last manuell korrigieren.

In vorteilhafter Weiterbildung weist der Manipulatorarm ein zusätzliches Schwenkgelenk mit einer horizontalen Schwenkachse für eine manuelle Höhenverstellung auf, wobei Momentenausgleichsmittel insbesondere in Form eines Gegengewichtes und/oder eines Ausgleichszylinders vorgesehen sind. Bei dieser Ausgestaltung kann die Last frei im Raum positioniert werden. Die Momentenausgleichsmittel stellen sicher, dass der Werker keine nennenswerten vertikalen Halte- bzw. Hubkräfte aufbringen muss. Da die Hubbewegungen in Vertikalrichtung in aller Regel geringer ausfallen als in Horizontalrichtung, kann hier auf einen Unterstützungsantrieb verzichtet werden. Gleichwohl ist aber die Anordnung eines Unterstützungsantriebs für das zusätzliche Schwenkgelenk mit der horizontalen Schwenkachse eine mögliche Option.

Bevorzugt ist der Manipulatorarm durch ein Paar von in Gewichtskraftrichtung übereinander angeordneten, in Höhenrichtung verschwenkbaren Parallelogrammarmen gebildet. Hierdurch ist sichergestellt, dass die außenseitig sich daran anschließenden Baugruppen einschließlich eines oder mehrerer weiterer Schwenkgelenke bei einer Höhenverstellung keine Kippbewegung durchführen. Die vertikale Schwenkachse eines äußeren Schwenkgelenks bleibt vertikal und damit frei von äußeren Gewichtskraftmomenten.

Ein Ausführungsbeispiel der Erfindung ist nachfolgend anhand der Zeichnung näher beschrieben. Es zeigen:
- Fig. 1: in einer Seitenansicht ein erfindungsgemäß ausgeführtes Hebezeug mit zwei Manipulatorarmen und mit Schwenkgelenken, die mit Unterstützungsantrieben versehen sind;
- Fig. 2: eine vergrößerte Detaildarstellung der Anordnung nach Fig. 1 im Bereich des zentralen Schwenkgelenkes mit Einzelheiten zur Ausgestaltung des Unter- stützungsantriebes als Pneumatikmotor mit Reibradgetriebe.

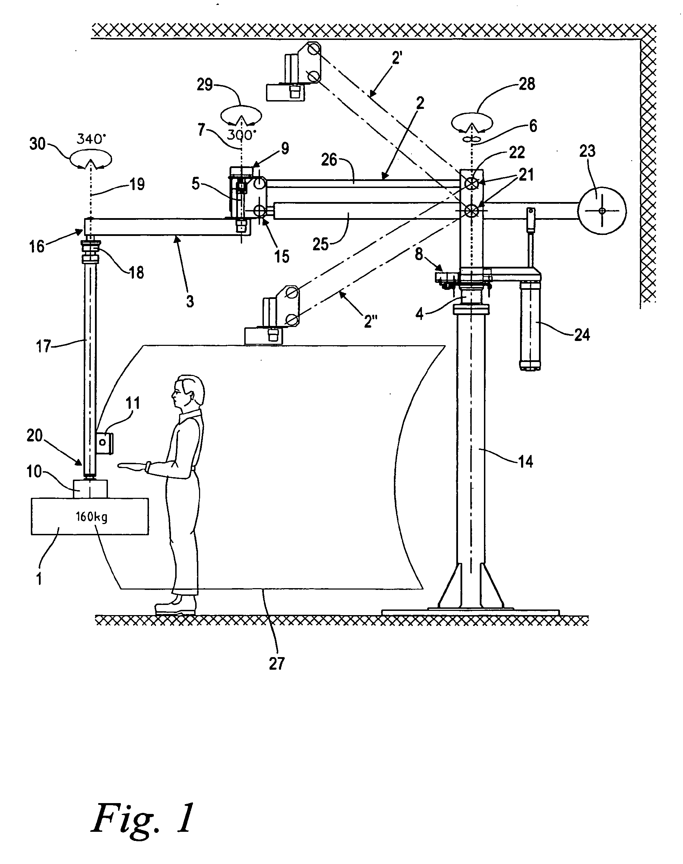

Fig. 1 zeigt in einer Seitenansicht ein erfindungsgemäß ausgeführtes Hebezeug zum manuellen Manipulieren einer schematisch dargestellten Last 1. Das Hebezeug umfasst mindestens einen, hier zwei Manipulatorarme 2, 3, wobei der erste Manipulatorarm 2 mittels eines zugeordneten Schwenkgelenkes 4 ortsfest gelagert ist. Für die ortsfeste Lagerung ist hier beispielhaft eine vertikal angeordnete Tragsäule 14 vorgesehen, die fest auf dem Boden verankert und in Gewichtskraftrichtung ausgerichtet ist. Das Schwenkgelenk 4 weist eine vertikale, ebenfalls in Gewichtskraftrichtung ausgerichtete Schwenkachse 6 auf, um die der erste Manipulatorarm 2 entsprechend einem Doppelpfeil 28 schwenkbar ist. Hierbei ist keine Schwenkwinkelbegrenzung vorgesehen, so dass die Last 1 in eine beliebige räumliche Position um die Tragsäule 14 herum verbracht werden kann. Es kann aber auch eine Schwenkwinkelbegrenzung zweckmäßig sein. Der zweite Manipulatorarm 3 ist mittels eines zugeordneten Schwenkgelenks 5 an einem freien Ende 15 des ersten Manipulatorsarms 2 gelagert. Auch das zweite Schwenkgelenk 5 weist eine vertikale, in Gewichtskraftrichtung ausgerichtete Schwenkachse 7 auf. Der zweite Manipulatorarm 3 ist ein Schwenkarm, der relativ zum ersten Manipulatorarm 2 um das Schwenkgelenk 5 entsprechend einem Doppelpfeil 29 schwenkbar ist, wobei hier eine Drehwinkelbegrenzung auf insgesamt 300° Schwenkwinkel vorgesehen ist. Auf eine Drehwinkelbegrenzung kann aber auch verzichtet werden.

Gegenüberliegend zum Schwenkgelenk 5 ist an einem freien Ende 16 des zweiten Manipulatorarms 3 ein weiteres Schwenkgelenk 18 mit einer vertikalen Schwenkachse 19 angeordnet, an dem ein vertikaler Träger 17 befestigt und in Gewichtskraftrichtung ausgerichtet ist. Im weiteren Schwenkgelenk 18 ist eine Drehwinkelbegrenzung auf insgesamt 340° vorgesehen, um die der vertikale Träger 17 entsprechend einem Doppelpfeil 30 verschwenkt werden kann. Auch hier kann auf eine Schwenkwinkelbegrenzung verzichtet werden. Gegenüberliegend zum weiteren Schwenkgelenk 18 weist der vertikale Träger 17 ein freies Ende 20 auf, an dem die schematisch angedeuteten Haltemittel 10 für die ebenfalls schematisch angedeutete Last 1 angeordnet sind. Das Schwenkgelenk 18 kann auch zwischen dem vertikalen Träger 17 und den Haltemitteln 10 angeordnet sein. Die Haltemittel 10 sind zum Greifen bzw. Halten der Last 1 vorgesehen. Darüber hinaus können sie zusätzliche Funktionen wie Kippen, Schwenken oder dergleichen an der Last 1 ausüben.

Die Anordnung ist dazu ausgelegt, dass sich ein Werker in ummittelbarer Nähe zur Last 1 bzw. den Haltemitteln 10 befindet und die Last 1 manuell manipulierend in die gewünschte Position verbringt. Hierzu kann der Werker eine Handkraft auf die Last 1 oder auf das Hebezeug in unmittelbarer Nähe zur Last 1, also auf die Haltemittel 10 oder auf den vertikalen Träger 17 aufbringen. In der Folge wird eine kombinierte Schwenkbewegung der Manipulatorarme 2, 3 um die zugeordneten Schwenkgelenke 4, 5 bzw. deren Schwenkachsen 6, 7 herbeigeführt, wodurch die Last 1 lateral oder in einer Schwenkbewegung parallel zum Boden geführt werden kann. Außerdem kann die Last 1 um die Schwenkachse 19 gedreht und positioniert werden.

Darüber hinaus weist zumindest der Manipulatorarm 2 an seinem der ortsfesten Lagerung zugeordneten Ende ein zusätzliches Schwenkgelenk 21 mit einer horizontalen Schwenkachse 22 für eine manuelle Höhenverstellung der Last 1 auf. Hierzu ist der Manipulatorarm 2 im gezeigten Ausführungsbeispiel durch ein Paar von in Gewichtskraftrichtung übereinander angeordneten, vertikal verschwenkbaren Parallelogrammarmen 25, 26 gebildet, wobei das Schwenkgelenk 21 ein Doppelgelenk für die beiden Parallelogrammarme 25, 26 ist. Auch gegenüberliegend im Bereich des zweiten Schwenkgelenkes 5 ist ein solches Doppelgelenk vorgesehen. Dies erlaubt eine manuelle Höhenverstellung des Manipulatorarmes 2 einschließlich der Last 1 ausgehend von der zeichnerisch dargestellten Mittelstellung in eine obere, mit 2' bezeichnete und in eine untere, mit 2" bezeichnete Endlage mit beliebigen Zwischenpositionen. Aus der Kombination der horizontalen und vertikalen Verschwenkung ergibt sich eine schematisch angedeutete Einhüllende 27, innerhalb derer das freie Ende 20 des vertikalen Trägers 17 bzw. die Haltemittel 10 und die Last 1 bewegt werden können, wobei die radial äußeren Schwenkachsen 7, 19 ihre vertikale Ausrichtung immer beibehalten. Die Einhüllende 27 verläuft als Rotationskörper um die Schwenkachse 6 bzw. um die Tragsäule 14 herum. Der radial innere Manipulatorarm übt damit eine Doppelfunktion als in der Honrizontalen bewegbarer Schwenkarm und als in der Vertikalen bewegbarer Hubarm aus.

Darüber hinaus sind Momentenausgleichsmittel vorgesehen, die die Gesamtanordnung einschließlich der Last 1 um die Schwenkachsen 22 zumindest näherungsweise frei von äußeren Gewichtskraftmomenten halten. Hierzu ist der Parallelogrammarm 25 ausgehend vom freien Ende 15 über das zentrale Schwenkgelenk 21 hinausgehend geführt und trägt an seinem dem freien Ende 15 gegenüberliegenden Ende ein Gegengewicht 23. Auf der gleichen Seite wie das Gegengewicht 23 greift auch ein pneumatischer Ausgleichszylinder 24 am Parallelogrammarm 25 des ersten Manipulatorarms 2 an. Die Gewichtskraft des Gegengewichts 23 und die Haltekraft des Ausgleichszylinders 24 sind derart bemessen, dass sie ein Gegenmoment um die Schwenkachsen 22 bilden, welches im Gleichgewicht zum Gewichtskraftmoment der Anordnung im Bereich der Manipulatorarme 2, 3 und der Last 1 steht. Zum Anheben bzw. Absenken der Last 1 muss demnach nur eine Handkraft aufgebracht werden, die zur Überwindung der Massenträgheit und der Reibmomente in den Schwenkgelenken ausreicht. Da darüber hinaus alle Schwenkgelenke 4, 5, 18 mit ihren vertikalen Schwenkachsen 6, 7, 19 naturgemäß frei von äußeren, um die vertikalen Schwenkachsen 6, 7, 19 wirkenden Gewichtskraftmomenten sind, gilt das Genannte auch in gleicher Weise für die Handkraft zur Erzeugung einer horizontalen Bewegung der Last 1.

Zur Unterstützung der Handkräfte des Werkers, die für eine horizontale Beschleunigung bzw. Verzögerung der Last 1 erforderlich sind, ist zumindest an einem der beiden Schwenkgelenke 4, 5 mit den vertikalen Schwenkachsen 6, 7 ein Unterstützungsantrieb 8, 9 vorgesehen. Im gezeigten Ausführungsbeispiel ist im Bereich beider Schwenkgelenke 4, 5 je ein Unterstützungsantrieb 8, 9 für eine Verschwenkung des jeweiligen Manipulatorarms 2, 3 um die jeweils zugeordnete Schwenkachse 6, 7 angeordnet. Darüber hinaus ist eine durch den Benutzer bzw. Werker betätigbare Steuereinrichtung 11 für die beide Unterstützungsantriebe 8, 9 im Bereich der Haltemittel 10 für die Last 1, hier am freien Ende 20 des vertikalen Trägers 17, angeordnet. Der Werker hat hierbei gleichzeitig Zugriff auf die Last 1 und auf die Steuereinrichtung 11. Dies ermöglicht es ihm, die Last 1 manuell zu bewegen und gleichzeitig unterstützende Antriebsleistung von den Unterstützungsantrieben 8, 9 durch Betätigen der Steuereinrichtung 11 abzurufen. Eine Verschwenkung der Last 1 um die Schwenkachsachse 19 sowie eine Höhenverstellung durch Verschwenkung um die Schwenkachsen 22 erfolgt jedoch rein manuell ohne motorische Unterstützung. Allerdings kann es zweckmäßig sein, auch hierbei motorische Unterstützungsantriebe vorzusehen, die dann mit der Steuereinrichtung 11 gesteuert bzw. betätigt werden.

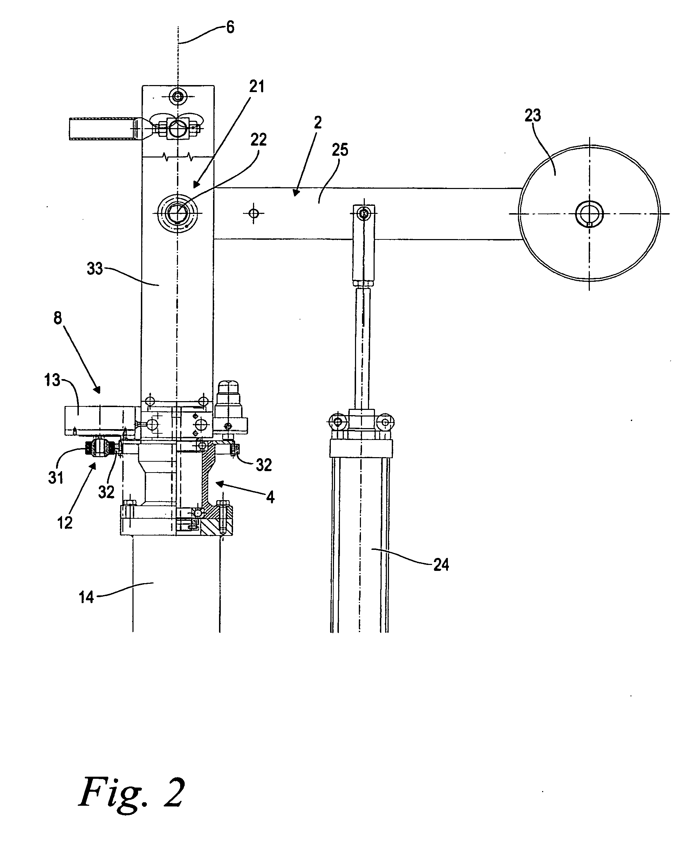

Fig. 2 zeigt eine vergrößerte Detaildarstellung der Anordnung nach Fig. 1 im Bereich der Tragsäule 14, des Schwenkgelenkes 4 und des ersten Manipulatorarms 2, wobei hier der Übersichtlichkeit halber vom Manipulatorarm 2 nur diejenige Hälfte des Parallelogrammarmes 25 mit dem Gegengewicht 23 und dem pneumatischen Ausgleichszylinder 24 dargestellt ist. Gleiche Merkmale sind hier mit gleichen Bezugszeichen versehen.

Es ist zu erkennen, dass der Manipulatorarm 2 mittels des Schwenkgelenkes 21 an einem vertikalen Drehträger 33 gelagert ist, wobei die gesamte Anordnung einschließlich des vertikalen Drehträgers 33 mittels des Schwenkgelenkes 4 an der Tragsäule 14 gelagert und als gesamte Einheit um die vertikale Schwenkachse 6 schwenkbar ist.

Der Unterstützungsantrieb 8 umfasst einen durch Luftdruck drehend angetriebenen Pneumatikmotor 13, mittels dessen die Baueinheit aus dem Drehträger 33 und den daran befestigten Baugruppen um die vertikale Schwenkachse 6 relativ zur Tragsäule 14 drehend antreibbar ist. Hierzu ist der Pneumatikmotor 13 fest mit dem Drehträger 33 verschraubt und weist ein Reibradgetriebe 12 auf. Das Reibradgetriebe 12 ist durch ein Reibrad 31 gebildet, welches durch den Pneumatikmotor 13 angetrieben wird, und welches auf einer Umfangsfläche einer drehfest mit der Tragsäule 14 verbundenen Reibscheibe 32 abrollt. Es kann aber auch eine umgekehrte Anordnung zweckmäßig sein, bei der der Pneumatikmotor 13 an der Tragsäule 14 und die Reibscheibe 32 am Drehträger 33 befestigt ist. Das Reibmoment kann mittels einer mechanischen Einstellvorrichtung, die das Reibrad 31 auf die Reibscheibe 32 presst, eingestellt bzw. geändert werden.

Die zwischen dem Reibrad 31 und der Reibscheibe 32 wirkenden Reibkräfte reichen aus, um ein hinreichend hohes Antriebsmoment für eine beschleunigte oder verzögerte Schwenkbewegung der Anordnung um die Schwenkachse 6 zu erzeugen. Bei Überschreiten eines Grenzmomentes rutscht jedoch das Reibrad 31 auf der Reibscheibe 32 durch, wodurch eine Momentenbegrenzung in Form einer Rutschkupplung gebildet ist. Die genannte Rutschkupplung ist derart ausgelegt, dass ihr übertragbares Reibmoment durch Handkraft des Benutzers überwunden werden kann. Dies ermöglicht eine motorisch unterstützte Schwenkbewegung der Anordnung, die jedoch bei Bedarf durch Handkraft übersteuert werden kann. Das Antriebsmoment des Unterstützungsantriebes 8 wird vom Benutzer vorrangig für die Erzeugung einer beschleunigten oder verzögerten Schwenkbewegung in Anspruch genommen. Der Pneumatikmotor 13 bzw. dessen Reibradgetriebe 12 bleibt jedoch dauerhaft auch im Stillstand der Anordnung oder bei einer gleichförmigen Bewegung eingekuppelt, so dass der Pneumatikmotor 13 bei einer gleichförmigen Schwenkbewegung im Wesentlichen kraft- bzw. momentenfrei mitläuft. Sofern der Werker mit der Steuereinrichtung 11 (Fig. 1) keine Antriebsleistung des Unterstützungsantriebs 8 in das System einspeist, kann der Pneumatikmotor 13 mit geringem Widerstand durchdrehen, wodurch trotz eingekuppeltem Reibradgetriebe 12 eine manuelle Verschwenkung bzw. Schwenkwinkelkorrektur um die Schwenkachse 6 allein durch Handkraft möglich ist.

Die Begrenzung zur Übertragung des Antriebsmomentes ist wie vorstehend beschrieben durch das Reibradgetriebe 12 gebildet, welches die Funktion einer Rutschkupplung ausübt. Es können aber auch andere Formen einer Momentenbegrenzung zweckmäßig sein. Beispielsweise kann zusätzlich zum Reibradgetriebe 12 eine eigenständige Rutschkupplung vorgesehen sein. Weitere Möglichkeiten einer Momentenbegrenzung bestehen in der Ausgestaltung des Unterstützungsantriebes 8 mit beeinflussbarem Antriebsmoment. Beispielsweise kann das Drehmoment des Pneumatikmotors 13 über Druck und Menge des antreibenden Luftstromes beeinflusst bzw. begrenzt werden. Anstelle des Pneumatikmotors 13 kann auch ein Hydraulikmotor eingesetzt werden, für den das Gleiche wie auch für den Pneumatikmotor 13 gilt.

Eine weitere Möglichkeit besteht in dem Einsatz eines Elektromotors, dessen Antriebsmoment über Frequenz und/oder Stromaufnahme regulierbar ist. In allen Fällen kann auch anstelle des Reibradgetriebes 12 ein formschlüssiger Antrieb beispielsweise in Form eines Direktantriebes, eines Zahnradgetriebes, eines Zahnriemengetriebes oder dergleichen zweckmäßig sein.

Das weitere Schwenkgelenk 5 mit dem zweiten Unterstützungsantrieb 9 (Fig. 1) ist analog zur Anordnung nach Fig. 2 aufgebaut, so dass das Genannte auch für eine Verschwenkung des zweiten Manipulatorarms 3 im Schwenkgelenk 5 um die vertikale Schwenkachse 7 gilt.

Insgesamt ist dadurch erreicht, dass der Werker die Last 1 manuell manipulierend frei im Raum bewegen, positionieren und halten kann. Um seine Handkraft zu unterstützen, kann er bei Bedarf über die Steuereinrichtung 11 zusätzliche Motorleistung durch die Unterstützungsantriebe 8, 9 abfragen, wodurch beschleunigte bzw. verzögerte Bewegungen von Lasten 1 mit hoher Masse erleichtert sind. Die bevorzugt dauerhaft eingekoppelten Unterstützungsantriebe 8, 9 verhindern jedoch nicht, dass weiterhin eine feinfühlige und lagegenaue Positionierung der Last 1 von Hand möglich ist.

## Patentansprüche

1. Hebezeug zum manuellen Manipulieren einer Last (1), umfassend mindestens einen Manipulatorarm (2, 3), der an einem zugeordneten Schwenkgelenk (4, 5) mit einer vertikalen Schwenkachse (6, 7) schwenkbar gelagert ist, und der Haltemittel (10) für die Last (1) aufweist, wobei ein auf das Schwenkgelenk (4, 5) einwirkender Unterstützungsantrieb (8, 9) für eine Verschwenkung des Manipulatorarms (2, 3) vorgesehen ist, und dass im Bereich der Haltemittel (10) für die Last (1) eine durch den Benutzer betätigbare Steuereinrichtung (11) für den Unterstützungsantrieb (8, 9) angeordnet ist,
**dadurch gekennzeichnet, dass** der Unterstützungsantrieb (8, 9) eine Momentenbegrenzung in Form einer Rutschkupplung umfasst, und dass die Rutschkupplung derart ausgelegt ist, dass ihr Übertragungsmoment durch Handkraft des Benutzers überwunden werden kann.

2. Hebezeug nach Anspruch 1,
**dadurch gekennzeichnet, dass** die Rutschkupplung durch ein Reibradgetriebe (12) gebildet ist.

3. Hebezeug nach Anspruch 1 oder 2,
**dadurch gekennzeichnet, dass** der Unterstützungsantrieb (8, 9) einen Pneumatikmotor (13) aufweist.

4. Hebezeug nach einem der Ansprüche 1 bis 3,
**dadurch gekennzeichnet, dass** der Manipulatorarm (2) mittels des zugeordneten Schwenkgelenkes (4) ortsfest insbesondere an einer Tragsäule (14) gelagert und dabei bevorzugt ohne Drehwinkelbegrenzung um das Schwenkgelenk (4) schwenkbar ist.

5. Hebezeug nach einem der Ansprüche 1 bis 4,
**dadurch gekennzeichnet, dass** zwei Manipulatorarme (2, 3) vorgesehen sind, wobei der zweite Manipulatorarm (3) mittels des zugeordneten Schwenkgelenkes (5) an einem freien Ende (15) des ersten Manipulatorarms (2) gelagert und dabei insbesondere mit einer Drehwinkelbegrenzung um das Schwenkgelenk (5) schwenkbar ist.

6. Hebezeug nach Anspruch 5,
**dadurch gekennzeichnet, dass** beide Schwenkgelenke (4, 5) mit je einem Unterstützungsantrieb (8, 9) versehen sind.

7. Hebezeug nach einem der Ansprüche 1 bis 6,
**dadurch gekennzeichnet, dass** die Haltemittel (10) für die Last (1) an einem freien Ende (16) des Manipulatorarms (3) mittels eines vertikalen Trägers (17) und eines weiteren Schwenkgelenkes (18) mit vertikaler Schwenkachse (19) befestigt sind, und dass die Haltemittel (10) durch Handkraft frei insbesondere mit einer Drehwinkelbegrenzung um das Schwenkgelenk (18) schwenkbar sind.

8. Hebezeug nach Anspruch 7,
**dadurch gekennzeichnet, dass** die Steuereinrichtung (11) an einem freien Ende (20) des vertikalen Trägers (17) nahe den Haltemitteln (10) für die Last (1) angeordnet ist.

9. Hebezeug nach einem der Ansprüche 1 bis 8,
**dadurch gekennzeichnet, dass** der Manipulatorarm (2) ein zusätzliches Schwenkgelenk (21) mit einer horizontalen Schwenkachse (22) für eine manuelle Höhenverstellung aufweist, und dass Momentenausgleichsmittel insbesondere in Form eines Gegengewichtes (23) und/oder eines Ausgleichszylinders (24) vorgesehen sind.

10. Hebezeug nach Anspruch 9,
**dadurch gekennzeichnet, dass** der Manipulatorarm (2) durch in Gewichtskraftrichtung übereinander angeordnete, vertikal verschwenkbare Parallelogrammarme (25, 26) gebildet ist.

## Claims

1. Lifting device for manual manipulation of a load (1), comprising at least one manipulator arm (2, 3) which is pivotably mounted on an assigned pivot joint (4, 5) with a vertical pivot axis (6, 7) and which comprises holding means (10) for the load (1), wherein a supporting drive (8, 9) acting on the pivot joint (4, 5) is provided for pivoting the manipulator arm (2, 3) and in the region of the holding means (10) for the load (1) a control means (11) for the supporting drive (8, 9), activated by the user, is provided,
**characterised in that** the supporting drive (8, 9) comprises a torque limitation in the form of a slip clutch and the slip clutch is designed in such a way that its transmission torque can be overcome through the manual force of the user.

2. Lifting device according to claim 1,
**characterised in that** the slip clutch is formed by a friction gear (12).

3. Lifting device according to claim 1 or 2,
**characterised in that** the supporting drive (8, 9) comprises a pneumatic motor (13).

4. Lifting device according to one of the claims 1 to 3,
**characterised in that** the manipulator arm (2) is fixedly mounted in particular on a supporting column (14) by means of the assigned pivot joint (4) and can thereby preferably be pivoted about the pivot joint (4) without rotation angle limitation.

5. Lifting device according to one of the claims 1 to 4,
**characterised in that** two manipulator arms (2, 3) are provided, wherein the second manipulator arm (3) is mounted by means of the assigned pivot joint (5) at a free end (15) of the first manipulator arm (2) and can thereby be pivoted about the pivot joint (5) in particular with a rotation angle limitation.

6. Lifting device according to claim 5,
**characterised in that** both pivot joints (4, 5) are provided with a respective supporting drive (8, 9).

7. Lifting device according to one of the claims 1 to 6,
**characterised in that** the holding means (10) for the load (1) are fixed at a free end (16) of the manipulator arm (3) by means of a vertical support (17) and a further pivot joint (18) with a vertical pivot axis (19) and the holding means (10) can be pivoted about the pivot joint (18) through manual force freely in particular with a rotation angle limitation.

8. Lifting device according to claim 7,
**characterised in that** the control means (11) is arranged at a free end (20) of the vertical carrier (17) close to the holding means (10) for the load (1).

9. Lifting device according to one of the claims 1 to 8,
**characterised in that** the manipulator arm (2) comprises an additional pivot joint (21) with a horizontal pivot axis (22) for a manual height adjustment and a torque compensation means is provided in particular in the form of a counter weight (23) and / or a compensating cylinder (24).

10. Lifting device according to claim 9,
**characterised in that** the manipulator arm (2) is formed by vertically pivotable parallelogram arms (25, 26) arranged one of top of the other in the weight force direction.

## Revendications

1. Instrument de levage pour la manipulation manuelle d'une charge (1), comprenant au moins un bras de manipulation (2, 3) qui est monté pivotant sur une articulation de pivotement (4, 5) associée et pourvue d'un axe de pivotement vertical (6, 7), et qui présente des moyens de fixation (10) pour la charge (1), étant précisé qu'il est prévu un entraînement d'assistance (8, 9), qui agit sur l'articulation de pivotement (4, 5), pour un pivotement du bras de manipulation (2, 3), et qu'il est prévu dans la zone des moyens de fixation (10) pour la charge (1) un dispositif de commande (11), apte à être actionné par l'utilisateur, pour l'entraînement d'assistance (8, 9), **caractérisé en ce que** l'entraînement d'assistance (8, 9) comprend une limitation de couple sous la forme d'un accouplement à glissement, et **en ce que** l'accouplement à glissement est conçu pour que son couple de transmission puisse être surmonté grâce à la force de la main de l'utilisateur.

2. Instrument de levage selon la revendication 1,
**caractérisé en ce que** l'accouplement à glissement est formé par un engrenage à friction (12).

3. Instrument de levage selon la revendication 1 ou 2,
**caractérisé en ce que** l'entraînement d'assistance (8, 9) comporte un moteur pneumatique (13).

4. Instrument de levage selon l'une des revendications 1 à 3,
**caractérisé en ce que** le bras de manipulation (2) est monté fixe, en particulier sur une colonne porteuse (14), à l'aide de l'articulation de pivotement (4) associée, en pouvant pivoter sur l'articulation de pivotement (4) de préférence sans limitation de l'angle de rotation.

5. Instrument de levage selon l'une des revendications 1 à 4,
**caractérisé en ce qu'**il est prévu deux bras de manipulation (2, 3), étant précisé que le second bras (3) est monté sur une extrémité libre (15) du premier bras (2) à l'aide de l'articulation de pivotement (5) associée, en pouvant pivoter sur celle-ci en particulier avec une limitation de l'angle de rotation.

6. Instrument de levage selon la revendication 5,
**caractérisé en ce que** les deux articulations de pivotement (4, 5) sont pourvues chacune d'un entraînement d'assistance (8, 9).

7. Instrument de levage selon l'une des revendications 1 à 6,
**caractérisé en ce que** les moyens de fixation (10) pour la charge (1) sont fixés à une extrémité libre (16) du bras de manipulation (3) à l'aide d'un support vertical (17) et d'une autre articulation de pivotement (18) à axe de pivotement vertical (19), et **en ce que** les moyens de fixation (10) sont aptes à pivoter sur l'articulation de pivotement (18) librement grâce à la force de la main, en particulier avec une limitation de l'angle de rotation.

8. Instrument de levage selon la revendication 7,
**caractérisé en ce que** le dispositif de commande (11) est disposé à une extrémité libre (20) du support vertical (17), près des moyens de fixation (10) pour la charge (1).

9. Instrument de levage selon l'une des revendications 1 à 8,
**caractérisé en ce que** le bras de manipulation (2) comporte une articulation de pivotement supplémentaire (21) à axe de pivotement horizontal (22) pour un réglage en hauteur manuel, et **en ce qu'**il est prévu des moyens d'équilibrage de couple, en particulier sous la forme d'un contrepoids (23) et/ou d'un cylindre d'équilibrage (24).

10. Instrument de levage selon la revendication 9,
**caractérisé en ce que** le bras de manipulation (2) est formé par des bras de parallélogramme (25, 26) qui sont superposés dans le sens de la gravité et qui sont aptes à pivoter verticalement.
